# EUROPEAN PATENT APPLICATION

(11) **EP 3 653 661 A1**
(43) Date of publication of application: **20.05.2020**
(21) Application number: 18831710.1
(22) Date of filing: 10.07.2018
(51) Int. Cl.: C08G 65/40, C08K 5/1575, C08G 75/0204, C08G 75/23, C08K 3/26

(54) **METHOD FOR PREPARING POLYARYLENE ETHER COPOLYMER COMPRISING ISOHEXIDE UNITS AND POLYARYLENE ETHER COPOLYMER PREPARED THEREBY**

(30) Priority: 12.07.2017 KR 20170088438
(71) Applicant: Korea Research Institute of Chemical Technology, Daejeon 34114 (KR)
(72) Inventor: HWANG, Sung Yeon, Seoul 01398 (KR); PARK, Jeyoung, Ulsan 44539 (KR); OH, Dong Yeop, Busan 48819 (KR); JEGAL, Jong Geon, Ulsan 44459 (KR); JEON, Hyeon Yeol, Busan 47356 (KR); PARK, Seul A, Ulsan 44421 (KR); NGUYEN, Hoang Linh, Pohang-si Gyeongsangbuk-do 37673 (KR)
(74) Representative: dompatent von Kreisler Selting Werner - Partnerschaft von Patent- und Rechtsanwälten mbB
(86) International application number: PCT/KR2018/007817
(87) International publication number: WO 2019/013529

(57) **Abstract**

The present invention relates to a method for preparing a polyarylene ether copolymer comprising isohexide units and a polyarylene ether copolymer prepared thereby and, more particularly, to an ultra-high molecular weight polyarylene ether copolymer comprising isohexide units by comprising a procedure of adding a crown ether-based compound, and to a method for preparing a polyarylene ether copolymer prepared therefrom.

## Description

### [Technical Field]

The present invention relates to a method for preparing a polyarylene ether copolymer comprising isohexide units, and more particularly, to a method for preparing an ultra-high molecular weight polyarylene ether copolymer comprising isohexide units by comprising a procedure of adding a crown ether-based compound, and a polyarylene ether copolymer prepared thereby.

### [Background Art]

Isohexide, which is an anhydrous sugar alcohol, may be obtained by a dehydration reaction of hexitol which is a typical material of hydrogenated sugar obtained by reducing isomers of glucose which is a biomass. Isohexide may be obtained from a renewable natural resource, such as corn, wheat, sugar, or the like, containing polysaccharide as one of its components, unlike existing raw materials based on petrochemical industry, and is a diol material with two hydroxyl groups in a molecule. The isohexide is used in a trans-esterification condensation reaction, and not only may be used to prepare an eco-friendly polyester or polycarbonate polymer material but also is broadly applied to industrial fields.

Isohexide is a synonym for 1,4:3,6-dianhydrohexitol, and exists in three different forms of stereo isomers such as isomannide, isosorbide, and isoidide. The stereo isomers have different chemical properties depending on a difference in a relative configuration of two hydroxyl groups of each stereo isomer. Among these isohexides, isosorbide prepared from sorbitol is currently most broadly applied to industrial fields.

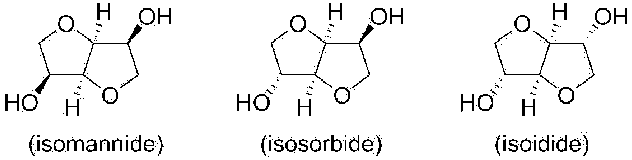

A polymer synthesized from a biomass resource has been more prominent in the entire human society because it provides an opportunity to relieve the burden on the environment and health by replacing petrochemical plastic. The success in a sustainable plastic industry led a change from a low cost product to a high value engineering plastic (EP). The intensive studies have been conducted to develop a biomass-based monomer suitable for a sustainable EP. Isosorbide (ISB), which is referred to as 1,4:3,6-dianhydro-D-glucitol, has a bicyclic structure having a dihydroxyl group, such that isosorbide may be used to prepare a thermostable polymer, that is, polyester and polycarbonate. Therefore, isosorbide is an attractive candidate material. ISB is more advantageous than bisphenol-A (BPA). In particular, ISB is excellent in terms of rigidity, optical properties, and ultraviolet resistance, and mechanical properties of a polymer.

In addition, ISB has been used to synthesize a poly(arylene ether) copolymer (PAEs) through a nucleophilic aromatic substitution (S_{N}Ar) in a polar aprotic solvent. In general, poly(arylene ether) is known as a typical super EP material (that is, product names such as PEEK, PSU, PESU, and PPSU) in application fields such as aerospace, automobiles, electronics, biomedical science, and sterilizing household goods.

In general, PAE is classified into a high performance polymer due to a super heat resistance, a chemical resistance, high glass transition, and excellent mechanical properties. PAE is also provided as a super EP material capable of withstanding a continuous operating temperature of 150°C or higher without losing excellent mechanical properties. Polysulfone (PSU) has been commercialized as an amorphous type super EP derived from BPA.

However, BPA acts as an endocrine disruptor and thus the use thereof is expected to be excluded in the plastic field. Because ISB has a structure similar to that of BPA and is a bio-based monomer having thermal stability, ISB is one of the alternatives to BPA. Kricheldorf and Chatti research group reported the synthesis of a poly(arylene ether sulfone) copolymer using ISB as a diol monomer replacing BPA; however, there is a limitation in terms of a low number average molecular weight (14,500 g/mol). Such a low molecular weight is disadvantageous in that an independent film necessary for additional mechanical property analysis cannot be prepared. When a conventional polymerization method is used, such a limitation is caused by incomplete reactivity of an ISB monomer and a high content of a cyclic oligomer.

Accordingly, the improvement of a polymerization method is required to make PAE containing ISB to be used as a sustainable super EP material.

### [Disclosure]

### [Technical Problem]

An object of the present invention is to provide a method for preparing an ultra-high molecular weight polyarylene ether copolymer having a higher molecular weight and shorter polymerization time than those of the related art by comprising a procedure of adding a crown ether-based compound in addition to a conventional method for preparing a polyarylene ether copolymer, and a polyarylene ether copolymer prepared thereby.

### [Technical Solution]

In one general aspect, there is provided a method for preparing a polyarylene ether copolymer containing a repeating unit represented by the following Formula 1 by reacting an isohexide compound represented by the following Formula 3 and a dihalogen compound represented by the following Formula 4 with each other in the presence of alkali metal carbonate and a crown ether-based compound represented by the following Formula 2.

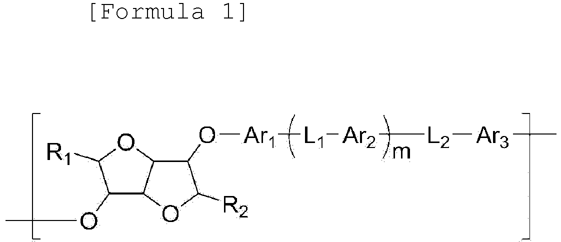

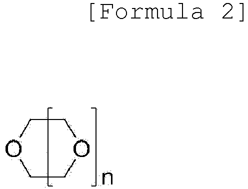

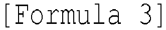

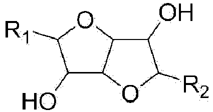

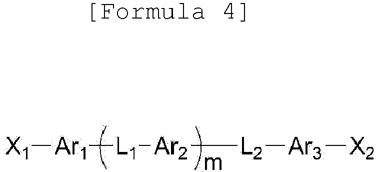

In Formulas 1 to 4,
R₁ and R₂ each independently represent hydrogen, substituted or unsubstituted C1-C10 alkyl, or substituted or unsubstituted C6-C20 aryl;
Ar₁ and Ar₃ each independently represent substituted or unsubstituted C6-C20 arylene;
Ar₂ represents substituted or unsubstituted C6-C20 arylene;
L₁ and L₂ each independently represent -SO₂- or -C(=O)-;
X₁ and X₂ each independently represent halogen;
n represents an integer of 3 to 6; and
m represents an integer of 0 to 10.

In another general aspect, there is provided a polyarylene ether copolymer containing a repeating unit represented by the following Formula 1 and having a weight average molecular weight of 70,000 or more, a tensile modulus of 1.7 GPa or more, and a tensile strength of 35 MPa or more.

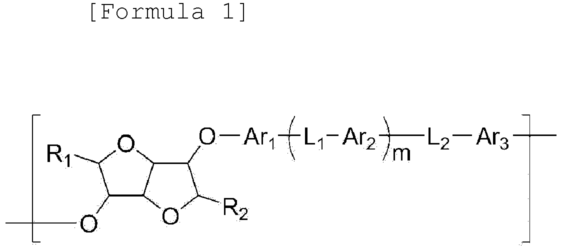

In Formula 1,
R₁ and R₂ each independently represent hydrogen, substituted or unsubstituted C1-C10 alkyl, or substituted or unsubstituted C6-C20 aryl;
Ar₁ and Ar₃ each independently represent substituted or unsubstituted C6-C20 arylene;
Ar₂ represents substituted or unsubstituted C6-C20 arylene;
L₁ and L₂ each independently represent -SO₂- or -C(=O)-; and
m represents an integer of 0 to 10.

### [Advantageous Effects]

The method for preparing a polyarylene ether copolymer comprising isohexide units according to the present invention has significantly increased reactivity of isohexide having a low nucleophilic aromatic substitution efficiency by adding a crown ether-based compound together with alkali metal carbonate which is a catalyst in a conventional procedure of preparing a polyarylene ether copolymer.

In addition, due to the increased reactivity of the isohexide, the prepared polyarylene ether copolymer comprising isohexide units not only has a high weight average molecular weight of 70,000 or more, but also shortens the polymerization reaction time required to prepare thereof.

In addition, the prepared polyarylene ether copolymer comprising isohexide units according to the present invention has a weight average molecular weight of 70,000 or more, such that the polyarylene ether copolymer exhibits excellent mechanical strengths such as a tensile modulus of 1.7 GPa or more and a tensile strength of 35 MPa or more, and has increased injection and extrusion properties. Therefore, the polyarylene ether copolymer may be efficiently used in commercial super engineering plastic material fields.

### [Description of Drawings]

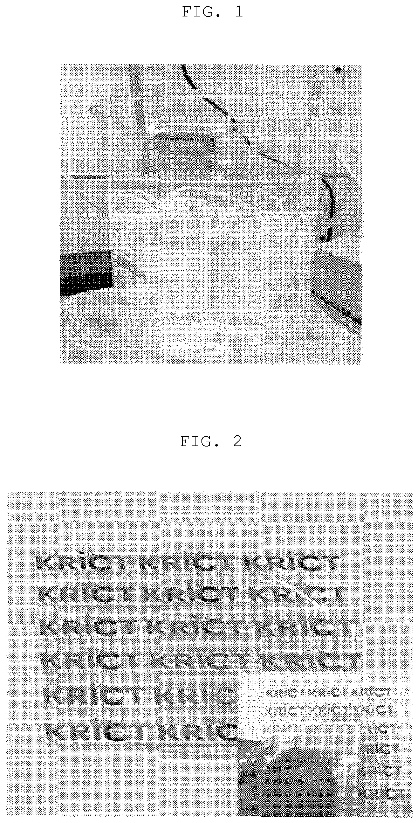

FIG. 1 illustrates a form of a polymer after being precipitated in a water/methanol solvent in Example 1.
FIG. 2 illustrates a form of a film prepared in Example 11.

### [Best Mode]

Hereinafter, the present invention will be described in detail.

In this case, unless otherwise defined, all technical terms and scientific terms used herein have the meaning as commonly understood by a person skilled in the art to which the present invention belongs. In addition, repeated descriptions of the same technical configurations and actions as in the related art are omitted.

The present invention relates to a method for preparing a polyarylene ether copolymer comprising isohexide units, and more particularly, to a method for preparing an ultra-high molecular weight polyarylene ether copolymer comprising isohexide units by comprising a procedure of adding a crown ether-based compound, and a polyarylene ether copolymer prepared thereby.

The present invention provides a method for preparing a polyarylene ether copolymer containing a repeating unit represented by the following Formula 1 by reacting an isohexide compound represented by the following Formula 3 and a dihalogen compound represented by the following Formula 4 with each other in the presence of alkali metal carbonate and a crown ether-based compound represented by the following Formula 2.

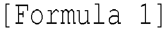

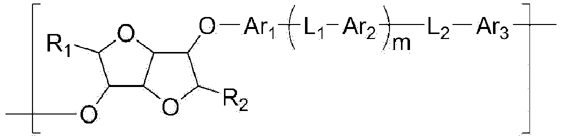

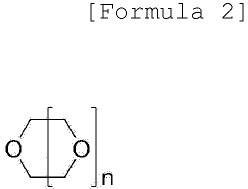

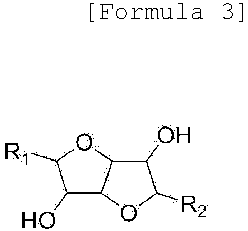

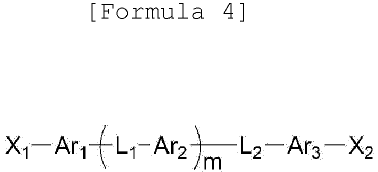

In Formulas 1 to 4,
R₁ and R₂ each independently represent hydrogen, substituted or unsubstituted C1-C10 alkyl, or substituted or unsubstituted C6-C20 aryl;
Ar₁ and Ar₃ each independently represent substituted or unsubstituted C6-C20 arylene;
Ar₂ represents substituted or unsubstituted C6-C20 arylene;
L₁ and L₂ each independently represent -SO₂- or -C(=O)-;
X₁ and X₂ each independently represent halogen;
n represents an integer of 3 to 6; and
m represents an integer of 0 to 10.

In an embodiment of the present invention, R₁ and R₂ each independently represent hydrogen, substituted or unsubstituted C1-C10 alkyl, or substituted or unsubstituted C6-C20 aryl, but are not limited thereto, and may independently represent hydrogen, methyl, ethyl, propyl, butyl, phenyl, biphenyl, or naphtyl, and may be substituted or unsubstituted.

In an embodiment of the present invention, Ar₁, Ar₂, and Ar₃, each independently represent substituted or unsubstituted C6-C20 arylene, but are not limited thereto, and may independently represent phenylene, biphenylene, naphthylene, anthracenylene, phenanthrylene, pyrenylene or tetracenylene, and may be substituted or unsubstituted.

In an embodiment of the present invention, the term 'substituted' in the description "substituted or unsubstituted" means to be further substituted to an unsubstituted substituent, substituents which are further substituted to R₁, R₂, Ar₁, Ar₂, and Ar₃ each represent one or more selected from the group consisting of halogen, C1-C10 alkyl, C1-C10 alkyl substituted with halogen, C6-C20 aryl, C3-C10 cycloalkyl, cyano, formyl, carboxyl, or nitro.

In an embodiment of the present invention, the isohexide compound may be an isohexide compound represented by the following Formula 5, and the dihalogen compound may be a dihalogen compound represented by the following Formula 6.

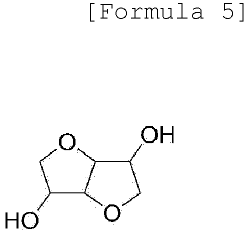

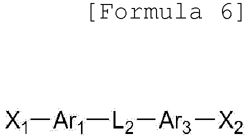

In Formula 6,
Ar₁ and Ar₃ each independently represent substituted or unsubstituted C6-C20 arylene;
L₂ represents -SO₂- or -C(=O)-; and
X₁ and X₂ each independently represent halogen.

In an embodiment of the present invention, the polyarylene ether copolymer may be a polyarylene ether copolymer containing a repeating unit represented by the following Formula 7.

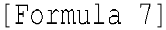

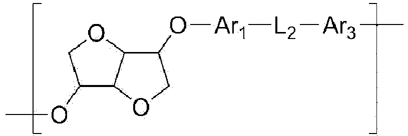

In Formula 7,
Ar₁ and Ar₃ each independently represent substituted or unsubstituted C6-C20 arylene; and
L₂ represents -SO₂- or -C(=O)-.

In an embodiment of the present invention, the alkali metal carbonate is a catalyst for a reaction, and may be selected from the group consisting of potassium carbonate, sodium carbonate, and a mixture thereof.

In an embodiment of the present invention, the amount of alkali metal carbonate used is not particularly limited, but when the amount of alkali metal carbonate used is too small, a reaction speed is decreased; on the other hand, when the amount of alkali metal carbonate used is too large, the remaining alkali metal carbonate may cause discoloration or deterioration of physical properties of a product. Therefore, the alkali metal carbonate may be used in an amount of 0.5 to 3 moles, preferably 1 to 2 moles, and more preferably 1 to 1.5 moles, based on 1 mole of the isohexide compound.

In an embodiment of the present invention, the amount of crown ether-based compound used is not particularly limited. However, the crown ether-based compound may be used in an amount of 0.005 to 0.5 moles and preferably 0.01 to 0.5 moles, based on 1 mole of the isohexide compound, in terms of improving reactivity of isohexide having a low nucleophilic aromatic substitution reaction efficiency and improving a molecular weight and mechanical properties of the prepared polymer.

In an embodiment of the present invention, the amount of dihalogen compound used is not particularly limited. However, the dihalogen compound may be used in an amount of 0.5 to 3 moles, preferably 0.8 to 1.2 moles, and more preferably 0.9 to 1.1 moles, based on 1 mole of the isohexide compound, in terms of a reaction efficiency.

In an embodiment of the present invention, a diol compound may be further contained in addition to the isohexide compound, and examples of the diol compound may include aromatic diol, alicyclic diol, aliphatic diol, or a combination thereof.

The aromatic diol may be selected from the group consisting of bisphenol A, 4,4'-dihydroxy-diphenyl sulfone, 4,4'-biphenol, hydroquinone, 4,4'-dihydroxy-diphenyl ether, 3-(4-hydroxyphenoxy)phenol, bis(4-hydroxyphenyl)sulfide, and a combination thereof, the alicyclic diol may be selected from the group consisting of 1,4-cyclohexanedimethanol, 1,3-cyclohexanedimethanol, 1,2-cyclohexanedimethanol, tricyclodecane dimethanol, adamantanediol, pentacyclopentadecane dimethanol, and a combination thereof, and the aliphatic diol may be selected from the group consisting of ethylene glycol, 1,3-propanediol, 1,2-propanediol, 1,4-butanediol, 1,3-butanediol, 1,2-butanediol, 1,5-heptanediol, 1,6-hexanediol, 1,4-cyclohexanedimethanol, and a combination thereof, but the present invention is not limited thereto.

In an embodiment of the present invention, the diol compound may be used in an amount of 0.01 to 10 moles and preferably 0.1 to 3 moles, based on 1 mole of the isohexide compound, in terms of a reaction efficiency.

In an embodiment of the present invention, the polymerization reaction may be performed at a temperature of 100 to 250°C under atmospheric pressure for 2 to 100 hours, in a polymerization reaction solvent known in the art, for example, in a polymerization reaction solvent such as N-methyl-2-pyrrolidone (NMP), dimethyl sulfoxide (DMSO), dimethyl acetamide (DMAc), dimethyl formamide (DMF), sulfolane, diphenyl sulfone (DPS), dimethyl sulfone (DMS), or the like, but the present invention is not limited thereto. After the polymerization is completed, the polymerization reaction product with increased viscosity is diluted with the same solvent as the polymerization reaction solvent to decrease the viscosity thereof, and then alkali metal of the alkali metal carbonate catalyst and alkali metal halide which is a halogen salt of the dihalogen compound are removed by filtering through celite. Thereafter, the diluted and filtered reaction product is precipitated in a solvent (for example, alcohol such as methanol, water, or a mixed solvent thereof), and then the precipitate is washed with water and the like, thereby preparing a polyarylene ether copolymer of the present invention.

In an embodiment of the present invention, the polyarylene ether copolymer prepared by the above method is a polyarylene ether copolymer containing a repeating unit represented by Formula 1. The polyarylene ether copolymer has a weight average molecular weight (in terms of polystyrene by gel permeation chromatography (GPC)) of 70,000 or more and more preferably 70,000 to 300,000 g/mol, exhibits excellent mechanical strengths such as a tensile modulus of 1.7 GPa or more and preferably 1.7 to 3 GPa, and a tensile strength of 35 MPa or more and more preferably 35 to 100 MPa, and has increased injection and extrusion properties. Therefore, the polyarylene ether copolymer may be efficiently used in super engineering plastic material fields.

Hereinafter, a method for preparing a polyarylene ether copolymer comprising isohexide units of the present invention will be described in more detail with reference to Examples. However, the following Examples are only a reference example for describing the present invention in detail, and the present invention is not limited thereto and may be implemented in various forms.

In addition, unless otherwise defined, all technical terms and scientific terms used herein have the same meaning as commonly understood by a person skilled in the art to which the present invention belongs. The terms used herein are only for effectively describing a certain example rather than limiting the present invention.

### [Physical property measurement method]

1) Molecular weight (g/mol) and molecular weight distribution: A value of a molecular weight and a molecular weight distribution in terms of standard polystyrene were determined by measurement with gel permeation chromatography (GPC) equipped with an RI detector using chloroform as a solvent.
   GPC instrument: ACQUITY APC, manufactured by Waters Corporation
   Column: ACQUITY APC™ manufactured by Waters Corporation
   Column temperature: 30°C
   Addition amount: 50 µl
   Flow rate: 0.62 ml/min
2) Preparation of test specimen for measuring tensile properties:
   - The polyarylene ether copolymer prepared in the present invention was stirred and dissolved in N,N'-dimethylacetamide at a concentration of 1 to 10 wt%. The concentration for adjusting a thickness of a film may be adjusted to 1 to 25 wt%.
   - The completely dissolved polymer solution was applied with an applicator using a glass plate as a support at a constant speed. Primary drying was performed by heating the applied solution in a hot air dryer capable of stepwise heating at a rate of 0.1°C/min in a range of 60 to 120°C, and then vacuum drying was additionally performed at 120°C for 12 hours.
   - After the completely dried polymer film was immersed in a water bath in which water was present, a film having a perfect form with no deformation was obtained, and then moisture present in a surface of the film was removed in a vacuum oven at a temperature of 100°C.
3) Tensile strength (MPa), elongation (%), and tensile modulus (GPa): The dried film was cut using a specimen cutter (Dumbbell cutter, manufactured by Labfactory), thereby preparing a dumbbell type specimen having a length of 25.5 mm, a width of 3.11 mm, and a thickness of 3.1 mm. Tensile properties were measured with an Intstron 5943 (UK) instrument by a standard and method in accordance with ASTM D638-03. The tensile properties were measured using a load cell of 10KN at a crosshead speed of 10 mm/min and 25°C, and a mean value was obtained by performing measurements 5 times per sample.

### [Example 1]

To a 2 L three-necked flask equipped with a mechanical stirrer, a thermometer, and a condenser, isosorbide (0.2775 mol, 40.55 g), 4,4'-difluorodiphenylsulfone (0.2775 mol, 70.55 g), K₂CO₃ (0.3469 mol, 47.94 g), 18-crown-6-ether (0.0139 mol, 3.67 g), and DMSO (350 mL) were added. The reaction mixture was heated to 160°C by being immersed in an oil bath in which a temperature was precisely controlled while allowing a weak nitrogen flow to flow to a condenser, and then a reaction was performed for 20 hours. DMSO (500 mL) was additionally added to the reactant with increased viscosity, the temperature of the reactant was decreased to 100°C, the viscosity of the reactant was decreased, the reactant was filtered through celite, and then the reactant was precipitated in a mixed solvent of methanol and water (1:1). The precipitate was filtered, washed, and then dried, thereby obtaining a polyarylene ether copolymer. Weight average molecular weight: 112,000 g/mol, PDI: 2.1

### [Example 2]

A reaction was performed in the same manner as that in Example 1 except that the amount of 18-crown-6-ether added was changed to 0.0028 mol (0.7335 g), thereby obtaining a polyarylene ether copolymer. Weight average molecular weight: 71,000 g/mol, PDI: 2.0

### [Example 3]

A reaction was performed in the same manner as that in Example 1 except that the amount of 18-crown-6-ether added was changed to 0.0069 mol (1.8337 g), thereby obtaining a polyarylene ether copolymer. Weight average molecular weight: 85,000 g/mol, PDI: 2.0

### [Example 4]

A reaction was performed in the same manner as that in Example 1 except that the amount of 18-crown-6-ether added was changed to 0.0278 mol (7.335 g), thereby obtaining a polyarylene ether copolymer. Weight average molecular weight: 123,000 g/mol, PDI: 2.1

### [Example 5]

A reaction was performed in the same manner as that in Example 1 except that K₂CO₃ was changed to Na₂CO₃ (0.3469 mol, 36.77 g) and 18-crown-6-ether was changed to 15-crown-5-ether (0.0139 mol, 3.056 g), thereby obtaining a polyarylene ether copolymer. Weight average molecular weight: 89,000 g/mol, PDI: 2.1

### [Example 6]

A reaction was performed in the same manner as that in Example 1 except that the amount of isosorbide added was changed to 0.01388 mol (20.28 g) and bisphenol-A (0.01388 mol, 31.68 g) was additionally added, thereby obtaining a polyarylene ether copolymer. Weight average molecular weight: 155,000 g/mol, PDI: 2.2

### [Example 7]

A reaction was performed in the same manner as that in Example 1 except that the amount of 4,4'-difluorodiphenylsulfone added was changed to 0.2831 mol (71.97 g), thereby obtaining a polyarylene ether copolymer. Weight average molecular weight: 115,000 g/mol, PDI: 2.1

### [Example 8]

A reaction was performed in the same manner as that in Example 1 except that 4,4'-difluorodiphenylsulfone was changed to 4,4-dichlorodiphenylsulfone (0.2775 mol, 79.68 g), thereby obtaining a polyarylene ether copolymer. Weight average molecular weight: 94,000 g/mol, PDI: 2.0

### [Example 9]

A reaction was performed in the same manner as that in Example 1 except that 4,4'-difluorodiphenylsulfone was changed to 4,4-difluorobenzophenone (0.2775 mol, 60.55 g), thereby obtaining a polyarylene ether copolymer. Weight average molecular weight: 118,000 g/mol, PDI: 2.2

### [Example 10]

A reaction was performed in the same manner as that in Example 1 except that 4,4'-difluorodiphenylsulfone was changed to 4,4-dichlorobenzophenone (0.2775 mol, 69.68 g), thereby obtaining a polyarylene ether copolymer. Weight average molecular weight: 89,000 g/mol, PDI: 2.0

### [Comparative Example 1]

A reaction was performed in the same manner as that in Example 1 except that 18-crown-6-ether was not added, thereby obtaining a polyarylene ether copolymer. Weight average molecular weight: 28,000 g/mol, PDI: 1.8

### [Comparative Example 2]

A reaction was performed in the same manner as that in Example 1 except that 18-crown-6-ether was not added, and toluene (50 mL) was added as a cosolvent to remove H₂O which is a reaction by-product by azeotropic distillation, thereby obtaining a polyarylene ether copolymer. Weight average molecular weight: 36,000 g/mol, PDI: 1.9

### [Comparative Example 3]

To a 2 L three-necked flask equipped with a mechanical stirrer, a thermometer, and a condenser, isosorbide (0.2775 mol, 40.55 g), bisphenol-A (0.2775 mol, 63.35 g), 4,4-dichlorodiphenylsulfone (0.555 mol, 159.37 g), K₂CO₃ (0.6105 mol, 84.37 g), N-methyl-2-pyrrolidone (NMP) (550mL), and chlorobenzene (60 mL) were added. The reaction mixture was heated to 160°C by being immersed in an oil bath in which a temperature was precisely controlled while allowing a weak nitrogen flow to flow to a condenser, H₂O was removed by azeotropic distillation with the chlorobenzene added as a cosolvent, and then the reaction mixture was heated to 192°C and reacted for 9 hours. NMP (500 mL) was additionally added to the reactant with increased viscosity, the temperature of the reactant was decreased to 100°C, the viscosity of the reactant was decreased, the reactant was filtered through celite, and then the reactant was immersed in a mixed solvent of methanol and water (1:1). The precipitate was filtered, washed, and then dried, thereby obtaining a polyarylene ether copolymer. Weight average molecular weight: 39,000 g/mol, PDI: 1.9

### [Comparative Example 4]

To a 2 L three-necked flask equipped with a mechanical stirrer, a thermometer, and a condenser, isosorbide (0.2775 mol, 40.55 g), 4,4'-difluorobenzophenone (0.2831 mol, 61.77 g), K₂CO₃ (0.5829 mol, 80.55 g), and sulfolane (700 mL) were added. The reaction mixture was heated to 140°C by being immersed in an oil bath in which a temperature was precisely controlled while allowing a weak nitrogen flow to flow to a condenser, toluene (280 mL) was added dropwise to the reaction mixture, and a reaction was performed for 48 hours while removing H₂O by azeotropic distillation with the toluene added as a cosolvent. The reactant was cooled to room temperature, diluted with dichloromethane (1100 mL), and then precipitated in toluene. The precipitate was filtered, washed with methanol, and then dried, thereby obtaining a polyarylene ether copolymer. Weight average molecular weight: 19,000 g/mol, PDI: 1.7

### [Comparative Example 5]

To a 500 mL three-necked flask equipped with a mechanical stirrer, a thermometer, and a condenser, isosorbide (0.1543 mol, 22.55 g), 4,4'-difluorobenzophenone (0.1563 mol, 34.11 g), K₂CO₃ (0.3179 mol, 43.94 g), and sulfolane (88.9 g) were added. The reaction mixture was heated to 210°C by being immersed in an oil bath in which a temperature was precisely controlled while allowing a weak nitrogen flow to flow to a condenser, and then a reaction was performed for 3 hours. The reactant was cooled to 170°C while being diluted with additional sulfolane (90 mL), and then CH₂Cl₂ gas (15 g) was bubbled in the reactant for 30 minutes or longer. The reactant was cooled to 120°C and salt was removed by passing through a glass fiber filter of 0.2 mm, precipitated in a mixer containing methanol (1 L), and then crushed. The polymer product was filtered, washed with hot water and methanol, and dried under reduced pressure at 100°C, thereby obtaining a polyarylene ether copolymer. Weight average molecular weight: 38,000 g/mol, PDI: 1.9

### [Comparative Example 6]

To a 250 mL three-necked flask equipped with a mechanical stirrer, a thermometer, and a condenser, isosorbide (0.0397 mol, 5.80 g), 4,4'-difluorodiphenyl sulfone (0.0409 mol, 10.4 g), K₂CO₃ (0.0595 mol, 8.23 g), DMSO (35 mL), and toluene (25 mL) were added. The reaction mixture was heated to 180°C while a weak nitrogen flow to be allowed to flow to a condenser, and then a reaction was performed for 1.5 hours. The reactant was cooled to 100°C while being diluted with DMSO (35 mL), precipitated in a mixer containing a water/methanol mixed solvent (1:1) (500 mL), and then crushed. A procedure of filtering the polymer product and crushing the filtered polymer product together with hot water in the mixture was repeated 3 times, and a procedure of crushing the polymer product with methanol was repeated 2 times. The product was washed with hot water and methanol, and dried under reduced pressure at 100°C, thereby obtaining a polyarylene ether copolymer. Weight average molecular weight: 39,000 g/mol, PDI: 1.9

### [Example 11] Preparation of polyarylene ether copolymer film

The polyarylene ether copolymer resin (10 g) of Example 1 was melted with DMAc (100 mL) to prepare a 10 wt% solution, and then the solution was applied with an applicator using a glass plate as a support at a constant speed. Primary drying was performed for 12 hours by heating the applied solution at a rate of 0.1°C/min in a range of 60 to 120°C in a hot air dryer capable of stepwise heating, and then a vacuum drying was additionally performed at 120°C for 12 hours. After the completely dried polymer film was immersed in a water bath in which water was present, a film having a perfect form with no deformation was obtained, and then moisture present in a surface of the film was removed in a vacuum oven at a condition of 100°C, thereby obtaining a transparent and rigid film having a thickness of 100 microns.

### [Examples 12 to 20] and [Comparative Examples 7 to 12] Preparation of polyarylene ether copolymer film

Polyarylene ether copolymer films were prepared in the same manner as that in Example 11 except that the polyarylene ether copolymer resins obtained in Examples 2 to 10 and Comparative Examples 1 to 6 were used instead of the polyarylene ether copolymer resin of Example 1.

The physical properties of the polyarylene ether copolymer resins obtained in Examples 11 to 20 and Comparative Examples 7 to 12 are shown in Table 1.

**[Table 1]**

| | Polyarylene ether copolymer | Mw (g/mol) | PDI | Tensile modulus (GPa) | Tensile strength (MPa) | Elongation (%) |
|---|---|---|---|---|---|---|
| Example 11 | Example 1 | 112,000 | 2.1 | 2.1 | 41 | 3 |
| Example 12 | Example 2 | 71,000 | 2.0 | 1.7 | 35 | 3 |
| Example 13 | Example 3 | 85,000 | 2.0 | 1.8 | 36 | 3 |
| Example 14 | Example 4 | 123,000 | 2.1 | 2.2 | 43 | 3 |
| Example 15 | Example 5 | 89,000 | 2.1 | 1.9 | 37 | 3 |
| Example 16 | Example 6 | 155,000 | 2.2 | 2.3 | 45 | 4 |
| Example 17 | Example 7 | 115,000 | 2.1 | 2.1 | 42 | 3 |
| Example 18 | Example 8 | 94,000 | 2.0 | 2.0 | 39 | 3 |
| Example 19 | Example 9 | 118,000 | 2.2 | 2.2 | 42 | 3 |
| Example 12 | Example 10 | 89,000 | 2.0 | 1.9 | 38 | 3 |
| Comparative Example 7 | Comparative Example 1 | 28,000 | 1.8 | 0.9 | 20 | 5 |
| Comparative Example 8 | Comparative Example 2 | 36,000 | 1.9 | 1.0 | 23 | 4 |
| Comparative Example 9 | Comparative Example 3 | 39,000 | 1.9 | 1.0 | 25 | 4 |
| Comparative Example 10 | Comparative Example 4 | 19,000 | 1.7 | 0.8 | 18 | 5 |
| Comparative Example 11 | Comparative Example 5 | 38,000 | 1.9 | 1.0 | 24 | 4 |
| Comparative Example 12 | Comparative Example 6 | 39,000 | 1.9 | 1.0 | 24 | 4 |

It was appreciated from Table 1 that the weight average molecular weight was significantly varied depending on whether the crown ether-based compound was added when the isohexide compound and the dihalogen compound were polymerized in the presence of the alkali metal carbonate catalyst. In the polymerization in which an isohexide-based compound was used as a diol monomer, in a case where the polymerization was performed without a crown ether-based compound (Comparative Examples 1 to 6), only a polyarylene ether copolymer having a weight average molecular weight of 40,000 or less was obtained. In addition, as in Comparative Examples 2, 3, 4, and 6, even in a case where the polymerization was performed without a crown ether-based compound and then the azeotropic distillation procedure was performed by toluene or chlorobenzene as a cosolvent, the obtained polyarylene ether copolymer still had 40,000 or less, that is, there was a limit in increasing the weight average molecular weight of the copolymer.

Since the weight average molecular weight had a large influence on the physical properties of the finally prepared film, in the case of the polyarylene ether copolymer films prepared in Examples 11 and 12 each having the weight average molecular weight of 70,000 or more, a tensile modulus of 1.7 GPa or more and a tensile strength of 35 MPa or more were achieved; on the other hand, in the case of the polyarylene ether copolymer films prepared in Comparative Examples 7 to 12 each having the weight average molecular weight of 40,000 or less, a tensile modulus was 1.0 GPa or less and a tensile strength was 25 MPa or less.

In all the cases of 1 mol% or more of the crown ether-based compound, the molecular weight was effectively increased, and in that condition, the molecular weight was effectively increased regardless of the type of dihalogen compound. As a result of polymerization of 15-crown-5-ether with sodium carbonate, other than potassium carbonate which is typical alkali metal carbonate, the molecular weight was also high. As a result of polymerization of a mixture of isosorbide and bisphenol-A, as a diol monomer, other than isosorbide alone, the molecular weight was also high. On the other hand, when the crown ether-based compound was not added, in any cases of a change in polar aprotic solvent, addition of azeotropic distillation solvent, a change in the type of dihalogen compound, a change in the amount of isohexide compound and dihalogen compound used, the molecular weight was not high.

### [Industrial Applicability]

The method for preparing a polyarylene ether copolymer comprising isohexide units according to the present invention has significantly increased reactivity of isohexide having a low nucleophilic aromatic substitution efficiency by adding a crown ether-based compound together with alkali metal carbonate which is a catalyst in a conventional procedure of preparing a polyarylene ether copolymer.

In addition, due to the increased reactivity of the isohexide, the prepared polyarylene ether copolymer comprising isohexide units not only has a high weight average molecular weight of 70,000 or more, but also shortens the polymerization reaction time required to prepare thereof.

In addition, the prepared polyarylene ether copolymer comprising isohexide units according to the present invention has a weight average molecular weight of 70,000 or more, such that the polyarylene ether copolymer exhibits excellent mechanical strengths such as a tensile modulus of 1.7 GPa or more and a tensile strength of 35 MPa or more, and has increased injection and extrusion properties. Therefore, the polyarylene ether copolymer may be efficiently used in commercial super engineering plastic material fields.

## Claims

1. A method for preparing a polyarylene ether copolymer containing a repeating unit represented by the following Formula 1 by reacting an isohexide compound represented by the following Formula 3 and a dihalogen compound represented by the following Formula 4 with each other in the presence of alkali metal carbonate and a crown ether-based compound represented by the following Formula 2, 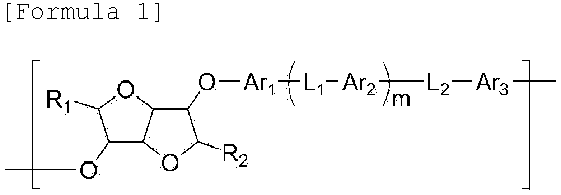 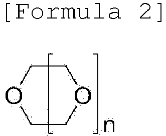 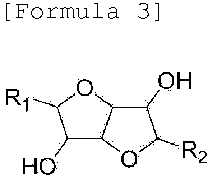 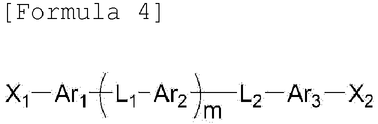 in Formulas 1 to 4,
R₁ and R₂ each independently represent hydrogen, substituted or unsubstituted C1-C10 alkyl, or substituted or unsubstituted C6-C20 aryl;
Ar₁ and Ar₃ each independently represent substituted or unsubstituted C6-C20 arylene;
Ar₂ represents substituted or unsubstituted C6-C20 arylene;
L₁ and L₂ each independently represent -SO₂- or -C(=O)-;
X₁ and X₂ each independently represent halogen;
n represents an integer of 3 to 6; and
m represents an integer of 0 to 10.

2. The method of claim 1, wherein
the isohexide compound is represented by the following Formula 5 and the dihalogen compound represented by the following Formula 6, 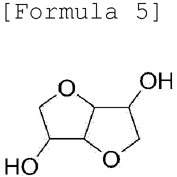 [Formula 6]
X₁-Ar₁-L₂-Ar₃-X₂
in Formula 6,
Ar₁ and Ar₃ each independently represent substituted or unsubstituted C6-C20 arylene;
L₂ represents -SO₂- or -C(=O)-; and
X₁ and X₂ each independently represent halogen.

3. The method of claim 1, wherein
the polyarylene ether copolymer contains a repeating unit represented by the following Formula 7, 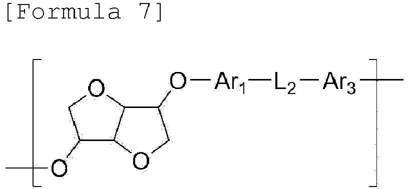 in Formula 7,
Ar₁ and Ar₃ each independently represent substituted or unsubstituted C6-C20 arylene; and
L₂ represents -SO₂- or -C(=O)-.

4. The method of claim 1, wherein
the alkali metal carbonate is selected from the group consisting of potassium carbonate, sodium carbonate, and a mixture thereof.

5. The method of claim 1, wherein
the alkali metal carbonate is used in an amount of 0.5 to 3 moles based on 1 mole of the isohexide compound, the crown ether-based compound is used in an amount of 0.005 to 0.5 moles based on 1 mole of the isohexide compound, and the dihalogen compound is used in an amount of 0.5 to 3 moles based on 1 mole of the isohexide compound.

6. The method of claim 1, wherein
a diol compound is further contained in addition to the isohexide compound.

7. The method of claim 6, wherein
the diol compound is aromatic diol, alicyclic diol, aliphatic diol, or a combination thereof.

8. The method of claim 7, wherein
the aromatic diol is selected from the group consisting of bisphenol A, 4,4'-dihydroxy-diphenyl sulfone, 4,4'-biphenol, hydroquinone, 4,4'-dihydroxy-diphenyl ether, 3-(4-hydroxyphenoxy)phenol, bis(4-hydroxyphenyl)sulfide, and a combination thereof, the alicyclic diol is selected from the group consisting of 1,4-cyclohexanedimethanol, 1,3-cyclohexanedimethanol, 1,2-cyclohexanedimethanol, tricyclodecane dimethanol, adamantanediol, pentacyclopentadecane dimethanol, and a combination thereof, and the aliphatic diol is selected from the group consisting of ethylene glycol, 1,3-propanediol, 1,2-propanediol, 1,4-butanediol, 1,3-butanediol, 1,2-butanediol, 1,5-heptanediol, 1,6-hexanediol, 1,4-cyclohexanedimethanol, and a combination thereof.

9. The method of claim 1, wherein
the polyarylene ether copolymer has a weight average molecular weight of 70,000 or more, a tensile modulus of 1.7 GPa or more, and a tensile strength of 35 MPa or more.

10. A polyarylene ether copolymer containing a repeating unit represented by the following Formula 1 and having a weight average molecular weight of 70,000 or more, a tensile modulus of 1.7 GPa or more, and a tensile strength of 35 MPa or more, 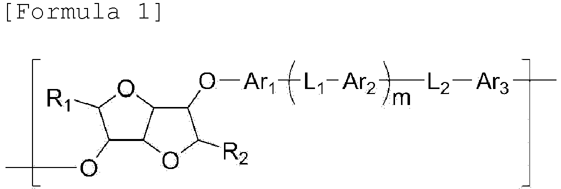 in Formula 1,
R₁ and R₂ each independently represent hydrogen, substituted or unsubstituted C1-C10 alkyl, or substituted or unsubstituted C6-C20 aryl;
Ar₁ and Ar₃ each independently represent substituted or unsubstituted C6-C20 arylene;
Ar₂ represents substituted or unsubstituted C6-C20 arylene;
L₁ and L₂ each independently represent -SO₂- or -C(=O)-; and
m represents an integer of 0 to 10.
